# EUROPEAN PATENT SPECIFICATION

(11) **EP 2 526 725 B1**
(45) Date of publication and mention of the grant of the patent: **23.05.2018**
(21) Application number: 11734941.5
(22) Date of filing: 21.01.2011
(51) Int. Cl.: H04W 4/02

(54) **METHOD AND SYSTEM FOR MANAGING AN INTERCONNECTION IN A BORDER CELL**
VERFAHREN UND SYSTEM ZUR VERWALTUNG EINER VERBINDUNG IN EINER GRENZZELLE
PROCÉDÉ ET SYSTÈME PERMETTANT DE GÉRER UNE INTERCONNEXION DANS UNE CELLULE FRONTIÈRE

(30) Priority: 21.01.2010 US 296897 P; 21.01.2010 SE 1050069
(43) Date of publication of application: 28.11.2012
(73) Proprietor: Synapse International S.A., 8211 Mamer (LU)
(72) Inventor: BERGQVIST, Per, L-2335 Luxembourg (LU); ERICSON, Lars-Göran, S-192 51 Sollentuna (SE); WILLEHADSON, Stefan, S-757 57 Uppsala (SE)
(74) Representative: Groth & Co. KB
(86) International application number: PCT/SE2011/050065
(87) International publication number: WO 2011/090431

(56) References cited:
- EP-A1- 1 041 837
- EP-A1- 1 988 699
- WO-A1-2007/002524
- WO-A1-2009/063136
- WO-A1-2009/063136
- US-A- 6 108 543
- US-A1- 2006 135 160
- US-A1- 2006 135 160

## Description

### Field of the invention

The present invention relates in a first aspect to a system operable to manage an interconnection when a mobile equipment of a subscriber is located in a border cell.

According to a second aspect the present invention relates to a method for managing an interconnection when a mobile equipment of a subscriber is located in a border cell.

According to a third aspect the present invention relates to at least one computer program product for managing an interconnection when a mobile equipment of a subscriber is located in a border cell.

### Background of the invention

In the world of today it is common that people uses mobile phones to perform calls, even when at home. Operators in different countries often has roaming agreements between each other making it possible for a person visiting a country to perform phone calls and access other network services, like accessing the internet.

Roaming between operators normally works without any major problems when a subscriber is within another country. However, problem arises when he/she is close to the border where it is possible to roam into a foreign operator even when he/she is within his/her home country. This is due to the simple fact that radio waves "ignores" borders and is distributed according to the normal physical laws.

Currently there exist solutions that make it possible for a mobile phone (in conjunction with the SIM card) to select one foreign network to roam into and to forbid other networks. There also exist solutions where the network forbids or allows roaming requests from a certain operator originating from the mobile phone.

In order to inform the user about which operator he/she currently use or is roamed into, the operator can set a service provider name in the mobile equipment.

One of the basic problems with roaming arises in the border regions of countries where one operator has a cell in their mobile network that is adjacent to a cell of another operator, where these two cells reside in different countries. Due to the general behaviour of the radio waves it is not certain which cell the mobile phone will select. According to this it is not predictable which operator the mobile phone will select as long as both cells are possible to select depending on roaming agreements and so forth. This leads to problems, especially for person that lives close to the border, since they may not know which network their mobile phones will select. The handset can select an expensive foreign network automatically without the subscriber noticing it based on radio coverage. If the foreign network is selected it will be expensive to use the mobile phone, possibly without that the subscriber notices this.

The patent document US 2006/0135160 A1 relates to registration of mobile devices at a border of two overlapping cellular networks. If a Border Roaming Gateway (BRG) discovers the Neighbouring Public Mobile Network (NPNM) border cell and the previous Home Public Mobile Network (HPMN) cell to be close or overlapping in the overlap database of border information, it sends a SMS to the subscriber in the NPMN to warn the subscriber that a roaming charge will be charged by the roaming network he/she currently in and suggests the subscriber to try manually or move physically back to the HPMN. Hence, the subscriber is notified that standard fees are not used.

A major drawback with this solution is that it can take a rather long time for a SMS to arrive to a mobile equipment, sometimes a very long time, implying that the subscriber will not receive the necessary information regarding in which network he/she is located in time. Furthermore, it is not sure that the subscriber recognizes that a SMS have been received when the subscriber is going to place/receive a call.

The patent document US 2002/0193125 A1 relates to a method and apparatus/device for alerting a user, when the user's mobile telephone unintentionally uses a foreign network which is outside of the user's home network. The solution in this document alerts the user of a mobile station to a situation where the mobile station is connected to a second international network with which the mobile station is not initially registered. If the mobile station senses that a call which is being handled is associated with a second international network, then the mobile station will switch to the second set of settings. The two settings may be identified to the user by different kinds of ringing tones; or, the two settings may be identified by a beep and a click, respectively. Or, one of the two settings can be identified by vibration of the casing of the user's mobile station.

A major drawback with this solution is that it is implemented in the mobile equipment, and not in the network. This implies that existing mobile equipments have to be amended/adapted.

The patent document WO 2004/014101 A2 relates to a method and system for cellular network traffic redirection. The traffic redirection (TR) network element sends a SMS message to the roaming mobile station, via the SMSC, informing the outbound roamer that he/she would benefit from economical roaming rates and value-added services if he/she manually switches to the home network preferred partner.

The patent document EP 1 988 699 A1 relates to a method and apparatus to enhance decision making capabilities of a user of a mobile device, the method having the steps of: receiving, at the mobile device, information related to the cost of mobile services; and communicating an indication of the cost of mobile services to the user. The indication can be an audio and/or visual indication.

The patent document WO 99/41932 A1 relates to a method which prevents mobile stations operating within its home network along a border, from erroneously accessing analogue control channels from another network with a different operator.

The above given solutions addresses the problem but are rather complicated. Furthermore, the above given solutions are not especially user friendly. The above given solutions does not address the problem with a border location area, i. e. a location area close to a country border or a border between location areas.

### Summary of the invention

The above mentioned problems are solved by a system operable to manage an interconnection when a mobile equipment of a subscriber is located in a border cell, or a border location area according to Claim 1. The system comprises a control means connected to a Home Location Register/Visitor Location Register, and to a Mobile Switching Center. The control means is operable to, prior an interconnection is established, check in the Home Location Register/Visitor Location Register, or the Mobile Switching Center if the current cell, or the current location area of the mobile equipment for the interconnection is a border cell, or a border location area. If it is determined that the current cell is a border cell, or that the current location area is a border location area, the control means is operable to set up a connection between a message system and the mobile equipment. The message system is comprised in the system, and is operable to send a message to the mobile equipment informing the subscriber about the situation with the border cell, or the border location area, prior the interconnection is established or disabled.

An advantage with the solution presented in Claim 1 is that it is very user friendly. Furthermore, it also presents a solution to the problem with a border location area.

A further advantage with this system is that it gives the subscriber enough information to take the decision to establish or disable an interconnection.

A yet further advantage with this system is that the subscriber will always (guaranteed) be informed about the current situation when located in a border cell/location area. Furthermore, this informing is always performed exactly before the setup of a connection is performed.

A further advantage in this context is achieved if the message system is connected to the Mobile Switching Center.

Furthermore, it is an advantage in this context if the message system is a voice message system, and if the message is a voice message. Hereby, the subscriber is alerted in an easy and safe way.

According to another embodiment it is an advantage if the message system is an Internet message system, and if the message is a web page. Hereby, the subscriber is alerted when he/she is accessing Internet from e. g. a computer using a 3G card.

A further advantage in this context is achieved if the mobile equipment is in the form of a mobile telephone, a personal digital assistance (PDA), or a portable computer.

The above mentioned problems are also solved with a method for managing, with the aid of a system, an interconnection when a mobile equipment of a subscriber is located in a border cell, or a border location area according to Claim 6. The method comprises the steps:
- with the aid of a control means, comprised in the system, and connected to a Home Location Register/Visitor Location Register, and to a Mobile Switching Center, all comprised in the system, to, prior an interconnection is established, check in the Home Location Register/Visitor Location Register, or the Mobile Switching Center if the current cell, or the current location area of the mobile equipment for the interconnection is a border cell, or a border location area;
- if it is determined that the current cell is a border cell, or that the current location area is a border location area, to set up a connection, with the aid of the control means, between a message system, comprised in the system, and the mobile equipment;
- with the aid of the message system, to send a message to the mobile equipment informing the subscriber about the situation with the border cell, or the border location area; and
- to establish the interconnection, or to disable the interconnection.

An advantage with the solution presented in Claim 6 is that it is very user friendly. Furthermore, it also presents a solution to the problem with a border location area.

A further advantage with this method is that it gives the subscriber enough information to take the decision to establish or disable an interconnection.

A yet further advantage with this method is that the subscriber will always (guaranteed) be informed about the current situation when located in a border cell/location area. Furthermore, this informing is always performed before the setup of a connection is performed.

A further advantage in this context is achieved if the message system is a voice message system, and if the step to send a message is composed of: to send a voice message. Hereby, the subscriber is alerted in an easy and safe way.

According to another embodiment it is an advantage if the message system is an Internet message system, and if the step to send a message is composed of: to send a web page. Hereby, the subscriber is alerted when he/she is accessing Internet from e. g. a computer using a 3G card.

Furthermore, it is an advantage in this context if the mobile equipment is in the form of a mobile telephone, a personal digital assistance (PDA), or a portable computer.

The above mentioned problems are also solved with at least one computer program product according to Claim 10. The at least one computer program product is directly loadable into the internal memory of at least one digital computer, and comprises software code portions for performing the steps of Claim 6 when the at least one product is/are run on the at least one computer.

An advantage with the solution presented in Claim 10 is that it is very user friendly. Furthermore, it also presents a solution to the problem with a border location area.

A further advantage with this product is that it gives the subscriber enough information to take the decision to establish or disable an interconnection.

A yet further advantage with this product is that the subscriber will always (guaranteed) be informed about the current situation when located in a border cell/location area. Furthermore, this informing is always performed exactly before the setup of a connection is performed.

It will be noted that the term "comprises/comprising" as used in this description is intended to denote the presence of a given characteristic, step or component, without excluding the presence of one or more other characteristic, features, integers, steps, components or groups thereof.

Embodiments of the invention will now be described with reference to the accompanying drawings, in which:

### Brief description of the drawings

Fig. 1 discloses schematically a border cell, i. e. a cell close to a country border;
Fig. 2 discloses schematically a border location area, i. e. a location area close to a border between location areas;
Fig. 3 is a block diagram of a first embodiment of a system operable to manage an interconnection when a mobile equipment of a subscriber is located in a border cell, or a border location area according to the present invention;
Fig. 4 is a block diagram of a second embodiment of a system operable to manage an interconnection when a mobile equipment of a subscriber is located in a border cell, or a border location area according to the present invention;
Fig. 5 is a flow chart of a method for managing an interconnection when a mobile equipment of a subscriber is located in a border cell, or a border location area according to the present invention; and
Fig. 6 schematically shows a number of computer program products according to the present invention.

### Detailed description of the preferred embodiments

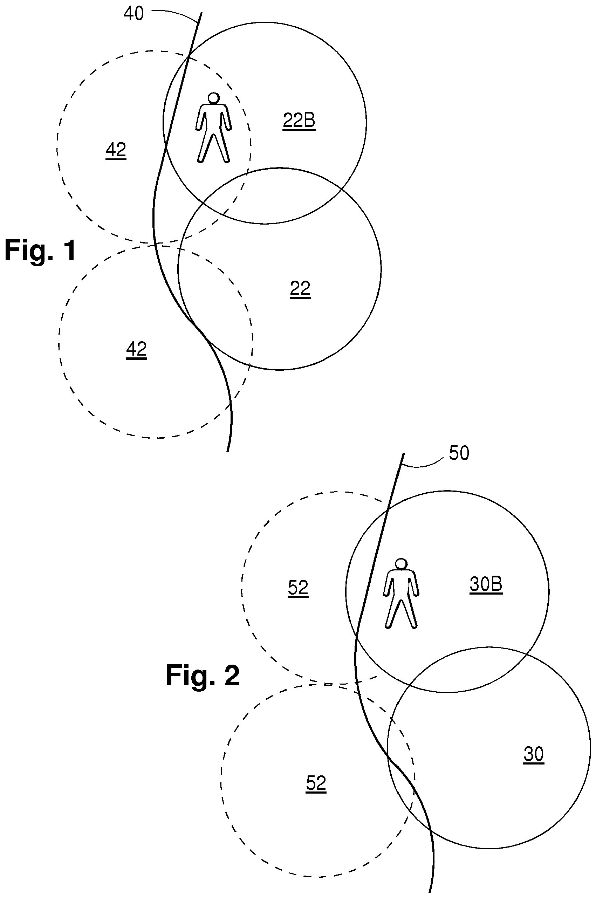

In fig. 1 there is schematically disclosed a border cell. In this figure we have a country border 40, two cells 22, 22B of the home operator, and two cells 42 of the foreign operator. In the cell 22B the subscriber is schematically disclosed in the form of a stick figure. In this particular example the cell 22B is a border cell 22B, i. e. a cell close to a country border 40.

In fig. 2 there is schematically disclosed a border location area. In this figure we have a border 50, and four different location areas 30, 30B, and 52. In the location area 30B the subscriber is schematically disclosed in the form of a stick figure. In this particular example the location area 30B is a border location area 30B, i. e. a location area close to a border between location areas.

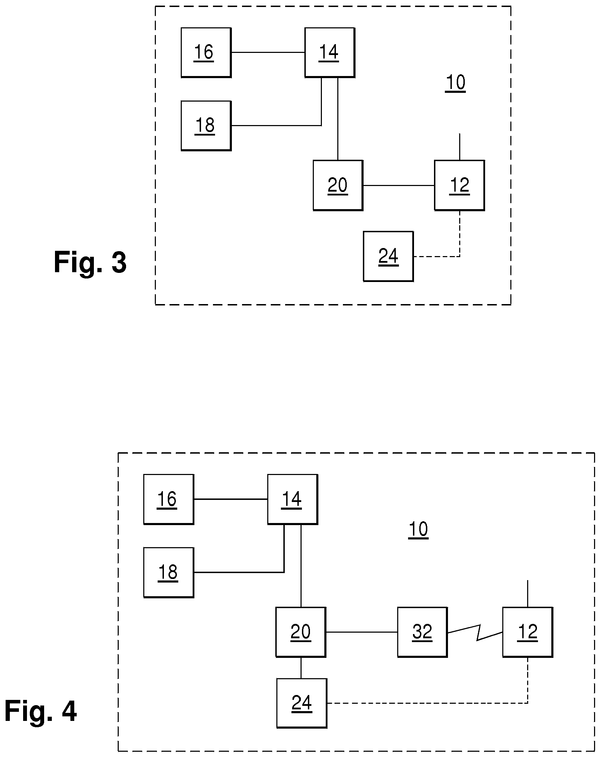

In fig. 3 there is disclosed a block diagram of a first embodiment of a system 10 operable to manage an interconnection when a mobile equipment 12 of a subscriber is located in a border cell, or a border location area. The system 10 comprises a control means 14 connected to a Home Location Register (HLR) 16, a Visitor Location Register (VLR) 18, and a Mobile Switching Center (MSC) 20. As also is apparent in fig. 3, the system 10 furthermore comprises a message system 24. The control means 14 is operable to, prior an interconnection is established, check in the Home Location Register 16/Visitor Location Register 18, or the Mobile Switching Center 20 if the current cell 22 (not disclosed in fig. 3), or the current location area 30 of the mobile equipment 12 for the interconnection is a border cell 22B, or a border location area 30B. If it is determined that the current cell 22 is a border cell 22B, or that the current location area 30 is a border location area 30B, the control means 14 is operable to set up a connection between the message system 24, and the mobile equipment 12, disclosed with a dashed line in fig. 3. The message system 24 is in turn operable to send a message to the mobile equipment 12 informing the subscriber about the situation with the border cell 22B, or the border location area 30B prior the interconnection is established or disabled.

In fig. 4 there is disclosed a block diagram of a second embodiment of a system 10 operable to manage an interconnection when a mobile equipment 12 of a subscriber is located in a border cell, or a border location area. Similar elements in figs. 3 and 4 have been designated with the same reference signs and will not be described in detail again. As is apparent in fig. 4, is that the message system 24 is connected to the Mobile Switching Center 20. Furthermore, the system 10 also comprises a base transceiver station (BTS) 32 connected to the Mobile Switching Center 20. The base transceiver station 32 is operable to facilitate wireless communication between the mobile equipment 12 and a network. The system 10 disclosed in fig. 4 functions in the same way as the system 10 disclosed in fig. 3.

According to a preferred embodiment of the present invention the message system 24 is a voice message system 24. This means that the message is a voice message.

According to another embodiment of the present invention the message system 24 is an Internet message system 24. This means that the message is a web page.

It is also pointed out that the mobile equipment 12 can be in the form of a mobile telephone, a personal digital assistance (PDA), or a portable computer.

Below we will describe four different cases wherein the system 10 according the present invention will take part.

A subscriber in the home network close to a country border 50 placing a call. The Mobile Switching Center 20 in the home network checks in the Home Location Register 16 for which cell 22 the subscriber, or actually the mobile equipment 12, currently is located in. If the control means 14 determines that the current cell 22 is a border cell 22B, then the subscriber will be alerted by e. g. a voice message sent to the mobile equipment 12. The subscriber can now choose to continue with the call setup procedure, knowing that the tariff would be higher than in the home network, or stop the call setup procedure. If it's on the other hand is determined that the current cell 22 is not a border cell, then the call setup procedure can continue as normal.

A subscriber in the home network close to a country border 50 receiving a call. The Mobile Switching Center 20 in the home network checks in the Home Location Register 16 for which cell 22 the subscriber, or actually the mobile equipment 12, currently is located in. If the control means 14 then determines that the current cell 22 is a border cell 22B, then the subscriber will be alerted by e. g. a voice message sent to the mobile equipment 12. The subscriber can now choose to continue with the call receiving procedure, knowing that the tariff would be higher than normal, or stopping the call receiving procedure by not answering the call. If it is on the other hand is determined that the current cell 22 is not a border cell, then the call receiving procedure can continue as normal.

A subscriber in a foreign network close to a country border 50 placing a call. The Mobile Switching Center 20 in the foreign network checks in its own Visitor Location Register 18 for which cell 22 the subscriber, or actually the mobile equipment 12, currently is located in. If the control means 14 determines that the current cell 22 is a border cell 22B, the subscriber will be alerted by e. g. a voice message sent to the mobile equipment 12. The subscriber can now choose to continue with the call setup procedure, knowing that the standard fees does not apply, or stop the call setup procedure. If it is on the other hand is determined that the current cell 22 is not a border cell, then the call setup procedure can continue as normal.

A subscriber in a foreign network close to a country border 50 receiving a call. The Mobile Switching Center 20 in the foreign network checks in its own Visitor Location Register 18 for which cell 22 the subscriber, or actually the mobile equipment 12, currently is located in. If the control means 14 determines that the current cell 22 is a border cell 22B, the subscriber will be alerted by e. g. a voice message sent to the mobile equipment 12. The subscriber can now choose to continue with the call receiving procedure, knowing that the standard fees does not apply, or stopping the call receiving procedure by not answering the call. If it is on the other hand is determined that the current cell 22 is not a border cell, then the call receiving procedure can continue as normal.

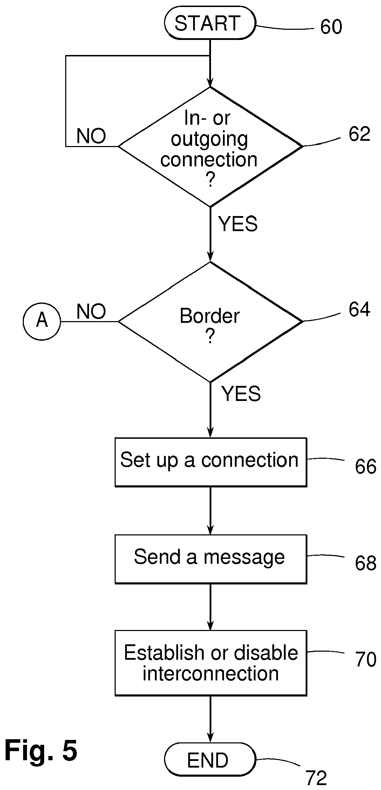

In fig. 5 there is disclosed a flow chart of a method for managing an interconnection when a mobile equipment 12 (see fig. 3 or 4) of a subscriber is located in a border cell, i. e. a cell close to a country border or a border between cells, or a border location area, i. e. a location area close to a country border, or a border between location areas. The method is performed with the aid of a system 10 (see fig. 3, or 4). The method begins at block 60. The method continues, at block 62, by asking the question: is there an in- or outgoing connection? If the answer is negative, the step according to block 62 is performed again. If, on the other hand, the answer is affirmative, the method continues, at block 64, by asking the question: is the current cell 22, or the current location area 30 of the mobile equipment 12 for the interconnection a border cell 22B, or a border location area 30B? If the answer is negative, then the interconnection can be established as normal, here only illustrated with the capitol letter A. If, on the other hand, the answer is affirmative, the method continues, at block 66, with the step: with the aid of the control means 14, to set up a connection between a message system 24, comprised in the system 10, and the mobile equipment 12. Thereafter, the method continues, at block 68, with the step: with the aid of the message system 24, to send a message to the mobile equipment 12, informing the subscriber about the situation with the border cell 22B, or the border location area 30B. The method continues, at block 70, with the step: to establish, or disable the interconnection. The method is completed at block 72.

According to a preferred embodiment of the method according to the present invention, the message system 24 is a voice message system 24, and the step to send a message is composed of: to send a voice message.

According to another alternative of the method according to the present invention, the message system 24 is an Internet message system 24, and the step to send a message is composed of: to send a web page.

According to another embodiment of the method, the mobile equipment 12 is in the form of a mobile telephone, a personal digital assistance (PDA), or a portable computer.

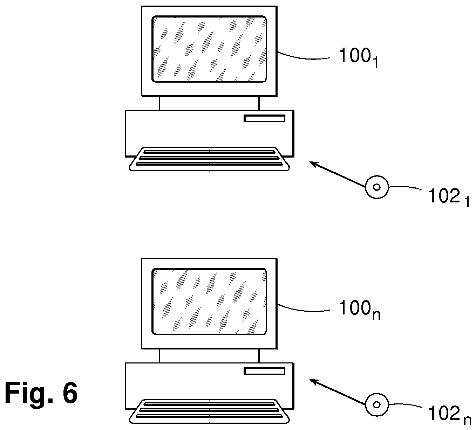

In fig. 6 there is schematically disclosed some computer program products 102₁, ..., 102ₙ according to the present invention. In fig. 6, n different digital computers 100₁, ..., 100ₙ are shown, wherein n is an integer. In fig. 6, n different computer program products 102₁, ..., 102ₙ are shown, here in the form of CD discs. The different computer program products 102₁, ..., 102ₙ are directly loadable into the internal memory of the n different computers 100₁, ..., 100ₙ. Each computer program product 102₁, ..., 102ₙ comprises software code portions for executing all steps according to fig. 5, when the product/products is/are run on the computers 100₁, ..., 100ₙ. The computer program products 102₁, ..., 102ₙ, may, for instance, be in the form of diskettes, RAM discs, magnetic tapes, magneto-optical discs or some other suitable products.

The invention is not limited to the described embodiments. It will be evident for those skilled in the art that many different modifications are feasible within the scope of the following Claims.

## Claims

1. A system (10) operable to manage an interconnection when a mobile equipment (12) of a subscriber is located in cell close to a country border or a border between cells, in the following called a border cell, or a location area close to a country border or a border between location areas, in the following called a border location area, **characterized in that** said system (10) comprises a control means (14) connected to a Home Location Register (16)/Visitor Location Register (18), and to a Mobile Switching Center (20), and operable to, prior an interconnection is established, check in said Home Location Register (16)/Visitor Location Register (18), or said Mobile Switching Center (20) if the current cell (22), or the current location area (30) of said mobile equipment (12) for said interconnection is a border cell (22B), or a border location area (30B), and if it is determined that said current cell (22) is a border cell (22B), or that the current location area (30) is a border location area (30B), said control means (14) is operable to set up a connection between a message system (24), in the form of a voice message system (24), or an Internet message system (24), comprised in said system (10), and said mobile equipment (12), wherein said message system (24) is operable to send a voice message, or a web page to said mobile equipment (12) informing the subscriber about the situation with said border cell (22B), or said border location area (30B) prior said interconnection is established or disabled.

2. A system (10) operable to manage an interconnection when a mobile equipment (12) of a subscriber is located in a border cell, or a border location area according to Claim 1, **characterized in that** said message system (24) is connected to said Mobile Switching Center (20).

3. A system (10) operable to manage an interconnection when a mobile equipment (12) of a subscriber is located in a border cell, or a border location area according to Claim 1, or 2, **characterized in that** said mobile equipment (12) is in the form of a mobile telephone, a personal digital assistance, PDA, or a portable computer.

4. A method for managing, with the aid of a system (10), an interconnection when a mobile equipment (12) of a subscriber is located in a cell close to a country border or a border between cells, in the following called a border cell, or a location area close to a country border or a border between location areas, in the following called a border location area, **characterized in that** said method comprises the steps:
- with the aid of a control means (14), comprised in said system (10), and connected to a Home Location Register (16)/Visitor Location Register (18), and to a Mobile Switching Center (20), all comprised in said system (10), to, prior an interconnection is established, check in said Home Location Register (16)/Visitor Location Register (18), or said Mobile Switching Center (20) if the current cell (22), or the current location area (30) of said mobile equipment (12) for said interconnection is a border cell (22B), or a border location area (30B);
- if it is determined that said current cell (22) is a border cell (22B), or that the current location area (30) is a border location area (30B), to set up a connection, with the aid of said control means (14), between a message system (24), in the form of a voice message system (24), or an Internet message system (24), comprised in said system (10), and said mobile equipment (12);
- with the aid of said message system (24), to send a voice message, or a web page to said mobile equipment (12) informing the subscriber about the situation with said border cell (22B), or said border location area (30B); and
- to establish said interconnection, or to disable said interconnection.

5. A method for managing an interconnection when a mobile equipment (12) of a subscriber is located in a border cell, or a border location area according to Claim 4, **characterized in that** said mobile equipment (12) is in the form of a mobile telephone, a personal digital assistance, PDA, or a portable computer.

6. At least one computer program product (102₁, ..., 102ₙ) directly loadable into the internal memory of at least one digital computer (100₁, ..., 100ₙ), comprising software code portions for performing the steps of Claim 4 when said at least one product (102₁, ..., 102ₙ) is/are run on said at least one computer (100₁....,100ₙ).

## Patentansprüche

1. System (10), das betreibbar ist, um eine Verbindung zu verwalten, wenn sich ein Mobilgerät (12) eines Teilnehmers in einer Zelle nahe einer Landesgrenze oder einer Grenze zwischen Zellen befindet, was in der Folge als Grenzzelle bezeichnet wird, oder in einem Aufenthaltsbereich nahe einer Landesgrenze oder einer Grenze zwischen Aufenthaltsbereichen befindet, was in der Folge als Grenzaufenthaltsbereich bezeichnet wird, **dadurch gekennzeichnet, dass** das System (10) ein Steuerungsmittel (14) umfasst, welches mit einem Heimatregister (16)/Besucherregister (18) und mit einer Mobilvermittlungsstelle (20) verbunden ist und betrieben werden kann, ehe eine Verbindung hergestellt wird, um sich in dem Heimatregister (16)/Besucherregister (18) oder der Mobilvermittlungsstelle (20) anzumelden, wenn die aktuelle Zelle (22) oder der aktuelle Aufenthaltsbereich (30) des Mobilgeräts (12) für die Verbindung eine Grenzzelle (22B) oder ein Grenzaufenthaltsbereich (30B) ist und wenn bestimmt wird, dass die aktuelle Zelle (22) eine Grenzzelle (22B) ist oder dass der aktuelle Aufenthaltsbereich (30) ein Grenzaufenthaltsbereich (30B) ist, wobei das Steuerungsmittel (14) betreibbar ist, um eine Verbindung zwischen einem Nachrichtensystem (24) in Form eines Sprachnachrichtensystems (24) oder eines Internetnachrichtensystems (24), das in dem System (10) enthalten ist, und dem Mobilgerät (12) aufzubauen, wobei das Nachrichtensystem (24) betreibbar ist, um eine Sprachnachricht oder eine Webseite zu dem Mobilgerät (12) zu senden, welche den Teilnehmer über die Situation mit der Grenzzelle (22B) oder dem Grenzaufenthaltsbereich (30B) zu informieren, ehe die Verbindung hergestellt oder deaktiviert wird.

2. System (10), das betreibbar ist, um eine Verbindung zu verwalten, wenn sich ein Mobilgerät (12) eines Teilnehmers in einer Grenzzelle oder einem Grenzaufenthaltsbereich befindet, nach Anspruch 1, **dadurch gekennzeichnet, dass** das Nachrichtensystem (24) mit dem Mobilvermittlungsstelle (20) verbunden ist.

3. System (10), das betreibbar ist, um eine Verbindung zu verwalten, wenn sich ein Mobilgerät (12) eines Teilnehmers in einer Grenzzelle oder einem Grenzaufenthaltsbereich befindet, nach Anspruch 1 oder 2, **dadurch gekennzeichnet, dass** das Mobilgerät (12) in Form eines Mobiltelefons, eines persönlichen digitalen Assistenten PDA oder eines tragbaren Rechners vorliegt.

4. Verfahren zum Verwalten einer Verbindung mithilfe eines Systems (10), wenn sich ein Mobilgerät (12) eines Teilnehmers in einer Zelle nahe einer Landesgrenze oder einer Grenze zwischen Zellen befindet, was in der Folge als Grenzzelle bezeichnet wird, oder einem Aufenthaltsbereich nahe einer Landesgrenze oder einer Grenze zwischen Aufenthaltsbereichen befindet, was in der Folge als Grenzaufenthaltsbereich bezeichnet wird, **dadurch gekennzeichnet, dass** das Verfahren folgende Schritte umfasst:
- mithilfe eines Steuerungsmittels (14), das in dem System (10) enthalten ist und mit einem Heimatregister (16)/Besucherregister (18) und mit einer Mobilvermittlungsstelle (20), die alle in dem System (10) enthalten sind, verbunden ist, ehe eine Verbindung hergestellt wird, in dem Heimatregister (16)/Besucherregister (18) oder der Mobilvermittlungsstelle (20) zu überprüfen, ob die aktuelle Zelle (22) oder der aktuelle Aufenthaltsbereich (30) des Mobilgeräts (12) für die Verbindung eine Grenzzelle (22B) oder ein Grenzaufenthaltsbereich (30B) ist;
- falls bestimmt wird, dass die aktuelle Zelle (22) eine Grenzzelle (22B) ist oder dass der aktuelle Aufenthaltsbereich (30) ein Grenzaufenthaltsbereich (30B) ist, mithilfe des Steuerungsmittels (14) eine Verbindung zwischen einem Nachrichtensystem (24) in Form eines Sprachnachrichtensystems (24) oder eines Internetnachrichtensystem (24), das in dem System (10) enthalten ist, und dem Mobilgerät (12) aufzubauen;
- mithilfe des Nachrichtensystems (24) eine Sprachnachricht oder eine Webseite an das Mobilgerät (12) zu senden, welche den Teilnehmer über die Situation mit der Grenzzelle (22B) oder dem Grenzaufenthaltsbereich (30B) informiert; und
- die Verbindung herzustellen oder die Verbindung zu deaktivieren.

5. Verfahren zum Verwalten einer Verbindung, wenn sich ein Mobilgerät (12) eines Teilnehmers in einer Grenzzelle oder einem Grenzaufenthaltsbereich befindet, nach Anspruch 4, **dadurch gekennzeichnet, dass** das Mobilgerät (12) in Form eines Mobiltelefons, eines persönlichen digitalen Assistenten PDA oder eines tragbaren Rechners vorliegt.

6. Mindestens ein Rechnerprogrammprodukt (102₁, ..., 102ₙ), das direkt in den internen Speicher von mindestens einem digitalen Rechner (100₁, ..., 100ₙ) ladbar ist, umfassend Softwarecodeabschnitte zum Ausführen der Schritte von Anspruch 4, wenn das mindestens eine Produkt (102₁, ..., 102ₙ) auf dem mindestens einen Rechner (100₁, ..., 100ₙ) ausgeführt wird.

## Revendications

1. Système (10) pouvant gérer une interconnexion lorsqu'un équipement mobile (12) d'un abonné est localisé dans une cellule proche d'une frontière de pays ou d'une frontière entre des cellules, dans ce qui suit appelée cellule frontière, ou d'une zone de localisation proche d'une frontière de pays ou d'une frontière entre des zones de localisation, dans ce qui suit appelée zone de localisation frontière, **caractérisé en ce que** ledit système (10) comprend un moyen de commande (14) raccordé à un enregistreur de localisation nominal (16)/enregistreur de localisation des visiteurs (18) et à un centre de commutation du service des mobiles (20) et pouvant, avant qu'une interconnexion ne soit établie, vérifier dans ledit enregistreur de localisation nominal (16)/enregistreur de localisation des visiteurs (18), ou dans ledit centre de commutation du service des mobiles (20), si la cellule actuelle (22), ou la zone de localisation actuelle (30) dudit équipement mobile (12) pour ladite interconnexion est une cellule frontière (22B), ou une zone de localisation frontière (30B) et s'il est déterminé que ladite cellule actuelle (22) est une cellule frontière (22B), ou que la zone de localisation actuelle (30) est une zone de localisation frontière (30B), ledit moyen de commande (14) peut établir une connexion entre un système de message (24), sous la forme d'un système de message vocal (24), ou d'un système de message Internet (24), inclus dans ledit système (10) et ledit équipement mobile (12), dans lequel ledit système de message (24) peut envoyer un message vocal, ou une page Web, audit équipement mobile (12) informant l'abonné de la situation par rapport à ladite cellule frontière (22B), ou ladite zone de localisation frontière (30B), avant que ladite interconnexion ne soit établie ou désactivée.

2. Système (10) pouvant gérer une interconnexion lorsqu'un équipement mobile (12) d'un abonné est localisé dans une cellule frontière, ou une zone de localisation frontière, selon la revendication 1, **caractérisé en ce que** ledit système de message (24) est raccordé audit centre de commutation du service des mobiles (20).

3. Système (10) pouvant gérer une interconnexion lorsqu'un équipement mobile (12) d'un abonné est localisé dans une cellule frontière, ou une zone de localisation frontière, selon la revendication 1, ou 2, **caractérisé en ce que** ledit équipement mobile (12) se présente sous la forme d'un téléphone mobile, d'un assistant numérique personnel, PDA, ou d'un ordinateur portable.

4. Procédé pour gérer, à l'aide d'un système (10), une interconnexion lorsqu'un équipement mobile (12) d'un abonné est localisé dans une cellule proche d'une frontière de pays ou d'une frontière entre des cellules, dans ce qui suit appelée cellule frontière, ou d'une zone de localisation proche d'une frontière de pays ou d'une frontière entre des zones de localisation, dans ce qui suit appelée zone de localisation frontière, **caractérisé en ce que** ledit procédé comprend les étapes consistant :
- à l'aide d'un moyen de commande (14), inclus dans ledit système (10) et raccordé à un enregistreur de localisation nominal (16)/enregistreur de localisation des visiteurs (18) et à un centre de commutation du service des mobiles (20), tous inclus dans ledit système (10), avant qu'une interconnexion ne soit établie, à vérifier dans ledit enregistreur de localisation nominal (16)/enregistreur de localisation des visiteurs (18), ou dans ledit centre de commutation du service des mobiles (20), si la cellule actuelle (22), ou la zone de localisation actuelle (30) dudit équipement mobile (12) pour ladite interconnexion est une cellule frontière (22B) ou une zone de localisation frontière (30B) ;
- s'il est déterminé que ladite cellule actuelle (22) est une cellule frontière (22B), ou que la zone de localisation actuelle (30) est une zone de localisation frontière (30B), à établir une connexion, à l'aide dudit moyen de commande (14), entre un système de message (24), sous la forme d'un système de message vocal (24), ou d'un système de message Internet (24), inclus dans ledit système (10) et ledit équipement mobile (12) ;
- à l'aide dudit système de message (24), à envoyer un message vocal, ou une page Web, audit équipement mobile (12) informant l'abonné de la situation par rapport à ladite cellule frontière (22B), ou ladite zone de localisation frontière (30B) ; et
- à établir ladite interconnexion ou à désactiver ladite interconnexion.

5. Procédé pour gérer une interconnexion lorsqu'un équipement mobile (12) d'un abonné est localisé dans une cellule frontière, ou une zone de localisation frontière, selon la revendication 4, **caractérisé en ce que** ledit équipement mobile (12) se présente sous la forme d'un téléphone mobile, d'un assistant numérique personnel, PDA, ou d'un ordinateur portable.

6. Au moins un produit-programme d'ordinateur (102₁, ..., 102n) pouvant être directement chargé dans la mémoire interne d'au moins un ordinateur numérique (100₁, ..., 100n), comprenant des parties de code logiciel pour réaliser les étapes selon la revendication 4 lorsque ledit ou lesdits produits (102₁, ..., 102ₙ) s'exécutent sur ledit ou lesdits ordinateurs (100₁, ..., 100ₙ).
